# EUROPÄISCHE PATENTSCHRIFT

(11) **EP 2 740 563 B1**
(45) Veröffentlichungstag und Bekanntmachung des Hinweises auf die Patenterteilung: **04.04.2018**
(21) Anmeldenummer: 12195582.7
(22) Anmeldetag: 05.12.2012
(51) Int. Cl.: B23K 37/02, B23K 26/08, B23Q 1/54

(54) **Bearbeitungseinrichtung, Bearbeitungsmaschine und Verfahren zum Bewegen eines Bearbeitungskopfs**
Processing device, processing machine and method for moving a machining head
Dispositif d'usinage, machine d'usinage et procédé de déplacement d'une tête d'usinage

(43) Veröffentlichungstag der Anmeldung: 11.06.2014
(73) Patentinhaber: TRUMPF Werkzeugmaschinen GmbH & Co. KG, 71254 Ditzingen (DE)
(72) Erfinder: Renz, Bernd, 71672 Marbach am Neckar (DE)
(74) Vertreter: Kohler Schmid Möbus Patentanwälte

(56) Entgegenhaltungen:
- EP-A1- 1 707 308
- WO-A1-02/34480
- WO-A1-02/49811
- WO-A1-02/085580
- WO-A1-2005/120780
- DE-A1- 19 525 482
- DE-A1- 19 955 520
- US-A1- 2005 135 914

## Beschreibung

Die vorliegende Erfindung betrifft eine Bearbeitungseinrichtung für die Werkstückbearbeitung, die einen Bearbeitungskopf zur Bearbeitung eines Werkstücks an einer Bearbeitungsstelle aufweist, eine Bearbeitungsmaschine, mit einer solchen Bearbeitungseinrichtung sowie ein Verfahren zum Bewegen des Bearbeitungskopfs einer solchen Bearbeitungseinrichtung.

In der EP 0 927 596 B1 ist ein operativer Kopf für eine Lasermaschine beschrieben, umfassend: ein Basisteil zum Empfang eines Laserstrahls entlang einer ersten Achse, einen Drehkörper, der von dem Basisteil zur Drehbewegung um eine zweite, zur ersten senkrechte Achse gehalten wird, sowie einen Endkörper, der bezüglich des Drehkörpers beweglich ist. Der Endkörper ist bezüglich des Drehkörpers auch entlang einer geraden Richtung parallel zur zweiten Achse beweglich und der Endkörper trägt eine Austrittsdüse für den Austritt eines fokussierten Laserstrahls.

Aus der WO 03/086717 A1 ist eine Vorrichtung zum Verfahren eines Arbeitskopfes im Raum bekannt geworden, welche eine Plattform aufweist, die in einer ersten Ebene zweidimensional bewegbar angeordnet ist und die ein um eine Drehachse drehbares Drehelement trägt. An dem Drehelement sind wenigstens zwei bezüglich des Drehelements verschiebbare Stangen angeordnet, welche eine Montagevorrichtung für einen Arbeitskopf oder einen Arbeitskopf selbst tragen. Bei einem Ausführungsbeispiel steht eine erste Stange in einem festen Winkel zum Drehelement, während die zweite Stange in einem veränderlichen Winkel zum Drehelement steht.

In der EP 1 870 214 A1 sowie in der EP 1 084 802 A2 ist ein Parallelroboter zur Verschiebung zumindest eines Teils einer sich bewegenden Plattform innerhalb von vier Freiheitsgraden beschrieben. Der Roboter weist eine Basis, vier an der Basis befestigte Aktuatoren sowie vier Stangenteile auf, wobei jedes Stangenteil zwei Parallelstangen umfasst, wobei jede Parallelstange an einem Ende mit einem beweglichen Abschnitt der Aktuatoren durch ein kinematisches Element gekoppelt ist. Die vier Ecken der sich bewegenden Plattform sind mit den anderen Enden der Stangenteile über kinematische Elemente verbunden.

In der DE 10 2010 022 852 A1 ist ein Werkzeugträger mit einer eine Basisebene definierenden Basis beschrieben, mit einem Basisarm, der um eine basisfeste, schräg zur Normalen auf die Basisebene verlaufende Basisachse schwenkbar ist; mit einem Tragarm, der am Basisarm um eine Armachse schwenkbar ist, und mit einem Werkzeughalter, der am Tragarm, bevorzugt entlang einer Werkzeugachse verschieblich, angeordnet ist, wobei die Basisachse, die Armachse und die Werkzeugachse einander in einem Zentralpunkt schneiden.

Aus der DE 199 55 520 A1 ist ein Bearbeitungskopf zur Bearbeitung von Freiformflächen bekannt geworden, der eine Grundplatte aufweist, die an eine Schnittstelle einer Werkzeugmaschine anschließbar ist, einen Träger für eine Bearbeitungsvorrichtung, sowie drei längenverstellbare Streben, die mit endseitigen Gelenken an den Träger und an die Grundplatte angeschlossen sind. Der Träger ist über ein Kugel- oder Kardangelenk beweglich mit der Grundplatte verbunden und die Streben weisen NC-gesteuerte Aktoren auf, so dass durch programmgesteuerte Stellbewegungen der Aktoren Schwenkbewegungen des Trägers um das Kugel- oder Kardangelenk ausführbar sind.

In der EP 0 674 969 B1 ist eine Koordinaten-Positionierungsmaschine beschrieben, die einen ersten und zweiten relativ bewegbaren Aufbau umfasst, die durch drei ausfahrbare und zurückziehbare Streben miteinander verbunden sind, wobei jede der Streben mit dem ersten und zweiten Aufbau durch eine erste bzw. zweite Drehbefestigung verbunden ist, wobei die Befestigungen eine Drehbewegung der Streben relativ zu den Aufbauten mit zumindest zwei Rotationsfreiheitsgraden ermöglichen. Eine Antirotationsvorrichtung beseitigt zumindest zwei Rotationsfreiheitsgrade des ersten Aufbaus relativ zum zweiten Aufbau.

Die WO-A-0249811 offenbart eine Anordnung zur translatorischen Positionierung einer Plattform, insbesondere einer Werkzeughalterung, mit längenunveränderlichen Gelenkstäben, deren erste Enden an der Plattform und deren zweite Enden an jeweils voneinander unabhängigen schienengeführten Schlitten angelenkt sind, wobei die Anlenkpunkte an der Plattform und die Anlenkpunkte an den Schlitten jeweils nicht auf einer Geraden liegen.

### Aufgabe der Erfindung

Es ist die Aufgabe der vorliegenden Erfindung, eine Bearbeitungseinrichtung mit einem Bearbeitungskopf, eine Bearbeitungsmaschine damit sowie ein Verfahren zum Bewegen des Bearbeitungskopfs dahingehend weiterzubilden, dass die Bahngeschwindigkeit insbesondere bei der Bearbeitung von Werkstücken mit großen Änderungen der Orientierung auf kurzen Bahnabschnitten gesteigert werden kann.

### Gegenstand der Erfindung

Diese Aufgabe wird erfindungsgemäß durch eine Bearbeitungseinrichtung nach Anspruch 1 gelöst. Bei herkömmlichen Bearbeitungsmaschinen mit zwei motorisch angetriebenen Dreh- bzw. Orientierungsachsen (B-Achse und C-Achse) ist typischer Weise die Bearbeitungsstelle (auch als "tool center point", TCP, bezeichnet) in einem Abstand zum Schnittpunkt der Orientierungsachsen angeordnet. Dies hat zur Folge, dass bei der Bearbeitung einer gekrümmten, dreidimensionalen Werkstückoberfläche die aus den Bewegungen der kartesischen Achsen (X-, Y- und Z-Achse) resultierende Bahn häufig komplexer und stärker gekrümmt ist als die eigentliche Bahn der Bearbeitungsstelle. Wegen der vergleichsweise geringen Dynamik der kartesischen Achsen führt dies zu einer ggf. deutlichen Reduzierung der Bahngeschwindigkeit in Bereichen mit großen Orientierungsänderungen auf kurzen Bahnabschnitten, d.h. bei kleinen Krümmungsradien der Oberfläche des zu bearbeitenden Werkstücks.

Erfindungsgemäß wird vorgeschlagen, zur Erzeugung einer Drehbewegung des Bearbeitungskopfs an Stelle einer motorisch angetriebenen Drehachse (B-Achse) eine Parallelkinematik zu verwenden, die eine Bewegung des Bearbeitungskopfs in einer Ebene ermöglicht. Durch die Verwendung von drei Verbindungseinrichtungen in Form von parallelkinematischen Achsen, deren am Bearbeitungskopf angreifende (zweite) Gelenkverbindungen mit Hilfe von geeigneten Antrieben, beispielsweise mit Linear(direkt)antrieben oder Kugelgewindetrieben, an unterschiedlichen Positionen in einer Ebene senkrecht zu den Schwenkachsen angeordnet werden können, kann bei geeigneter Koordinierung bzw. Ansteuerung der parallelkinematischen Achsen der Bearbeitungskopf gezielt so in der Ebene verschoben werden, dass sich der Drehwinkel bzw. die Orientierung verändert, aber der Bearbeitungskopf stets im selben Abstand zur Drehachse ausgerichtet bleibt, welche die Bearbeitungsstelle enthält. Der Bearbeitungskopf kann somit eine Drehbewegung um eine in Bezug auf den Grundkörper ortsfeste Drehachse ausführen, ohne dass zu diesem Zweck eine Bewegung entlang der kartesischen Grundachsen erforderlich ist. Zusätzlich zur Drehbewegung kann durch die parallelkinematischen Achsen auch eine hoch dynamische redundante Bewegung der Bearbeitungsstelle sowohl in der Ebene senkrecht zur Drehachse als auch entlang der Drehachse ausgeführt werden. Diese Zusatz-Achsbewegung geht typischer Weise von einer Grundstellung aus, in welcher die Bearbeitungsstelle am Schnittpunkt der Drehachse (B-Achse) mit einer weiteren Drehachse (C-Achse) positioniert ist, die durch eine Bearbeitungsmaschine realisiert wird, an welcher die Bearbeitungseinrichtung drehbar gelagert ist.

Die parallelkinematische Lagerung ermöglicht zudem einen vergleichsweise schlanken Aufbau, der die Zugänglichkeit zum Werkstück nur wenig einschränkt. Durch die Tatsache, dass die Bearbeitungsstelle in der Grundstellung im Schnittpunkt der Orientierungsachsen liegt, vereinfacht sich die Bahnaufteilung zwischen den kartesischen Grundachsen und den Zusatzachsen, wobei eine kinematische Transformation für die Parallelkinematik bevorzugt erst nach der Bahnaufteilung erfolgt. Die Veränderung der Position der zweiten Gelenkverbindungen kann beispielsweise durch teleskopierbare Verbindungseinrichtungen bzw. durch teleskopierbare Bauelemente der jeweiligen Verbindungseinrichtungen realisiert werden. Erfindungsgemäß weist jede Verbindungseinrichtung zwei stabartige Verbindungselemente auf, die jeweils über ein erstes Kugel- oder Kardangelenk an dem Grundkörper und über jeweils ein zweites Kugel- oder Kardangelenk an dem Bearbeitungskopf angebracht sind. Durch die Anbindung des Bearbeitungskopfs am Grundkörper über Kugelgelenke bzw. Kardangelenke sowie das Vorsehen von zwei stabartigen Verbindungselementen kann eine Bewegung des Bearbeitungskopfs nicht nur in einer Ebene senkrecht zur Drehachse, sondern auch entlang der Drehachse realisiert werden. Um die Bewegung in Richtung der Drehachse zu realisieren, können die stabartigen Verbindungselemente teleskopierbar ausgebildet sein, so dass die Länge der Verbindungselemente unabhängig voneinander veränderbar ist. Weisen die Verbindungselemente eine unterschiedliche Länge auf, wird der an den Kugelgelenken gelagerte Bearbeitungskopf in Richtung der Drehachse parallel verschoben. Hierbei verändert sich auch die Position der Bearbeitungsstelle auf der Drehachse, d.h. diese stimmt nicht mehr mit dem Schnittpunkt zwischen der B-Achse und der C-Achse überein. Erfindungsgemäß sind zur Parallelverschiebung des Bearbeitungskopfs in Richtung der Drehachse die Positionen der ersten Kugel- oder Kardangelenke der stabartigen Verbindungselemente einer der Verbindungseinrichtungen unabhängig voneinander einstellbar. Für die Verschiebung der Bearbeitungsstelle in Richtung der Drehachse können die Kugel- oder Kardangelenke der beiden Verbindungselemente beispielsweise entlang der senkrecht bzw. im Wesentlichen senkrecht zur Drehachse verlaufenden Richtung gegenläufig bewegt werden, was denselben Effekt wie das oben beschriebene Erhöhen bzw. Verringern der Länge von teleskopierbaren Verbindungselementen hat. Die Positionen der ersten Kugel- oder Kardangelenke können aber auch unabhängig voneinander in zwei unterschiedlichen Ebenen eingestellt werden, die nicht senkrecht zur Drehachse verlaufen. Für die Wahl eines geeigneten Winkels, den die beiden Ebenen mit der Drehachse einschließen, sind mehrere Kriterien ausschlaggebend, beispielsweise die kinematische Übersetzung zwischen dem Aktor bzw. Motor und der Bearbeitungsstelle sowie die Steifigkeit und Kompaktheit (bzw. Störkontur) der gesamten Bearbeitungseinrichtung.

In einer Ausführungsform umfasst die Bearbeitungseinrichtung mindestens ein an dem Grundkörper entlang einer Linearführung verschiebbar geführtes Lagerelement zur Verbindung einer ersten Gelenkverbindung einer Verbindungseinrichtung oder eines ersten Kugel- oder Kardangelenks eines Verbindungselements mit dem Grundkörper. Die Linearführungen verlaufen typischer Weise in einer - nicht zwingend gemeinsamen - Ebene senkrecht zur Drehachse und ermöglichen es, die Position der ersten Gelenkverbindung bzw. eines ersten Kugelgelenks in dieser Ebene zu verändern, wodurch sich auch die Position der zugehörigen zweiten Gelenkverbindung bzw. des zugehörigen zweiten Kugelgelenks in der Ebene senkrecht zur Drehachse entsprechend verändert. Sofern auf eine Bewegung des Bearbeitungskopfs entlang der Drehachse (B-Achse) verzichtet wird, sind typischer Weise drei Linearführungen mit drei Lagerelementen vorgesehen, um die zwei Gelenke bzw. das Scharniergelenk einer jeweiligen ersten Gelenkverbindung einer Verbindungseinrichtung zu verschieben.

Um den Bearbeitungskopf auch in Richtung der Drehachse parallel verschieben zu können, sind bevorzugt die ersten Kugel- oder Kardangelenke der stabartigen Verbindungselemente einer der Verbindungseinrichtungen an zwei Lagerelementen angebracht, die entlang von zwei Linearführungen gegenläufig verschiebbar sind. In diesem Fall wird an einer der Linearführungen nur ein erstes Kugel- oder Kardangelenk eines ersten Verbindungselements einer der drei Verbindungseinrichtungen angebracht. Das entsprechende erste Kugelgelenk des zweiten Verbindungselements dieser Verbindungseinrichtung wird an einer zusätzlichen, vierten Linearführung angebracht, um dieses unabhängig verschieben zu können. Durch diese vierte parallelkinematische Achse wird ein zusätzlicher Freiheitsgrad für die Bewegung des Bearbeitungskopfs in Richtung der Drehachse geschaffen, d.h. es wird eine weitere redundante Zusatzachse realisiert, so dass der Bearbeitungskopf eine redundante hoch dynamische Achsbewegung in drei Achsrichtungen ausführen kann. Die beiden Linearführungen können beispielsweise entlang einer im Wesentlichen senkrecht zur Drehachse verlaufenden Richtung parallel ausgerichtet sein. Es ist aber auch möglich, die Linearführungen unter einem Winkel zueinander bzw. in Ebenen anzuordnen, die nicht senkrecht zur Drehachse verlaufen.

Bei einer bevorzugten Ausführungsform sind die Linearführungen zur Verschiebung des jeweiligen Lagerelements in einer Ebene senkrecht zur Drehachse über eine Strecke ausgebildet, die ausreichend ist, um den Bearbeitungskopf um einen Drehwinkel von 90° oder mehr, bevorzugt von 180° oder mehr um die Drehachse (virtuelle B-Achse) zu drehen. Der Schwenkbereich des Bearbeitungskopfs hängt neben der Strecke, welche die Lagerelemente entlang der Linearführung zurücklegen können, auch von der Anordnung der zweiten Gelenke bzw. der Gelenkpunkte am Bearbeitungskopf ab. Für die Werkstückbearbeitung ist es günstig, wenn der Drehwinkel im Bereich von +/- 90°, d.h. insgesamt über 180° einstellbar ist.

Der Grundkörper ist in der Regel so ausgebildet, dass er die Linearführungen geeignet unterstützt, d.h. die Linearführungen verlaufen an den Oberflächen des Grundkörpers. Der Grundkörper kann beispielsweise als symmetrisches Trapez (d.h. mit paralleler Ober- und Unterseite) ausgebildet sein. Der Grundkörper sollte ein möglichst geringes Gewicht sowie ein möglichst geringes Massenträgheitsmoment in Bezug auf die C-Achse aufweisen. Vorzugsweise ist der Grundkörper als (dünnwandiger) Hohlkörper ausgebildet, an dessen Innenseite beispielsweise Stabilisierungsrippen ausgebildet sein können.

Die Bearbeitungseinrichtung umfasst typischer Weise zusätzlich einen einem jeweiligen Lagerelement zugeordneten Aktor zur Verschiebung des Lagerelements. Der Aktor sollte eine möglichst hohe Dynamik bei möglichst geringem Eigengewicht aufweisen und kann beispielsweise als Lineardirektantrieb oder als Kugelgewindetrieb realisiert werden. Die Versorgung des Antriebs mit Energie bzw. Leistung kann mit Hilfe von in den Grundkörper integrierten Zuführungsleitungen realisiert werden, die mit der Bearbeitungsmaschine in Verbindung stehen, an denen die Bearbeitungseinrichtung angebracht ist.

Ein weiterer Aspekt der Erfindung ist realisiert in einer Bearbeitungsmaschine, insbesondere einer Laserbearbeitungsmaschine, umfassend: eine Bearbeitungseinrichtung wie oben beschrieben. Als Bearbeitungsmaschine kann eine herkömmliche Laserbearbeitungsmaschine zur dreidimensionalen Bearbeitung von Werkstücken dienen, bei der die angetriebene B-Achse durch die Bearbeitungseinrichtung ersetzt ist. Es versteht sich, dass auch Bearbeitungsmaschinen, die zur Werkstückbearbeitung auf eine andere Art als mit einem Laserstrahl, beispielsweise mittels einer mechanischen, z.B. mittels einer schleifenden Bearbeitung ausgebildet sind, mit der hier beschriebenen Bearbeitungseinrichtung ausgestattet werden können. Die Bearbeitungseinrichtung kann auch an einer Bearbeitungsmaschine in Form eines Industrie-Roboters bzw. eines Roboterarms angebracht werden.

Bei einer bevorzugten Ausführungsform umfasst die Laserbearbeitungsmaschine ein Lichtleitkabel zur Zuführung eines Laserstrahls zu dem Bearbeitungskopf sowie eine Fokussiereinrichtung zur Fokussierung des Laserstrahls auf einen die Bearbeitungsstelle bildenden Fokuspunkt. Bei der Laserbearbeitung stimmt die Bearbeitungsstelle typischer Weise mit dem Fokuspunkt des Laserstrahls überein. Die Zuführung des Laserstrahls über ein Lichtleitkabel (optische Faser) ist günstig, da eine freie Strahlpropagation von der Bearbeitungsmaschine zum Bearbeitungskopf aufgrund der verwendeten Parallelkinematik typischer Weise zu aufwändig wäre. Es versteht sich, dass die Laserbearbeitungsmaschine eine Laserquelle zur Erzeugung des Laserstrahls umfasst. Der Laserbearbeitungskopf weist typischer Weise auch eine Düse zur Aufbringung eines Lasergases in den Bereich der Bearbeitungsstelle auf.

Bei einer vorteilhaften Ausführungsform weist die Bearbeitungseinrichtung ein Halteelement auf, das an einer Halteeinrichtung der Bearbeitungsmaschine befestigt ist, wobei die Halteeinrichtung ausgebildet ist, die Bearbeitungseinrichtung um eine zur Drehachse senkrechte weitere Drehachse zu drehen. Bei dem Halteelement kann es sich beispielsweise um ein im Wesentlichen rundes, z.B. scheiben- oder kragenförmiges Bauteil handeln, an dem die Halteeinrichtung angreifen kann, um die Bearbeitungseinrichtung um die C-Achse zu drehen, welche beispielsweise durch das Zentrum des kreisrunden Verbindungselements laufen kann. Es versteht sich, dass das Halteelement auch auf andere Weise ausgebildet werden kann. Die Halteeinrichtung kann auch durch eine Werkzeugaufnahme an einem Roboter gebildet sein.

Bevorzugt weist die Bearbeitungsmaschine eine Bewegungseinrichtung zur Bewegung der Halteeinrichtung entlang von mindestens zwei, bevorzugt entlang von drei Linearachsen auf. Die zwei bzw. drei Linearachsen bauen typischer Weise aufeinander auf, d.h. eine erste Linearführung dient zur Bewegung eines ersten Bauteils entlang einer ersten Linearachse, eine an dem Bauteil angebrachte zweite Linearführung dient zur Bewegung eines weiteren Bauteils entlang einer zweiten Linearachse etc. Die Bewegung, insbesondere die Beschleunigung, der Halteeinrichtung entlang der kartesischen Linearachsen ist im Vergleich zur Bewegung bzw. Beschleunigung der parallelkinematischen Zusatz-Achsen der Bearbeitungseinrichtung niedrig.

Die Winkel, unter denen die Linearführungen zur weiteren Drehachse verlaufen, hängen vom angestrebten Bewegungsspielraum und von der Größe des Bearbeitungskopfes ab. Die Winkel müssen so gewählt werden, dass es innerhalb des beabsichtigten Bewegungsraums nicht zu Kollisionen zwischen den verschiedenen (Verbindungs-)Elementen der Parallelkinematik kommt.

Bei einer weiteren Ausführungsform verläuft mindestens eine der Linearführungen parallel zur weiteren Drehachse (C-Achse) und mindestens eine weitere der Linearführungen ist unter einem Winkel zur weiteren Drehachse ausgerichtet. In Abhängigkeit von den Größenverhältnissen und vom gewünschten Bewegungsraum kann es sich als günstig erweisen, wenn mindestens eine Linearführung die Bewegung einer entsprechenden Gelenkverbindung bzw. eines entsprechenden Kugel- oder Kardangelenks in Richtung der weiteren Drehachse ermöglicht. Insbesondere kann es sich bei der Verbindungseinrichtung um die mittlere der drei Verbindungseinrichtungen handeln. Die beiden äußeren Verbindungseinrichtungen können einen im Betrag gleich großen Winkel mit der weiteren Drehachse einschließen. Die Ausrichtung der Linearführungen in einer Projektion in eine Ebene senkrecht zur Drehachse (B-Achse) wird vorzugsweise so gewählt, dass die beiden äußeren Linearführungen einen Winkel von z.B. 90° miteinander einschließen. Es versteht sich aber, dass auch spitze oder stumpfe Winkel zwischen den äußeren Linearführungen vorgesehen werden können. Die mittlere Linearführung bzw. im Falle einer vierten Achse die mittleren Linearführungen können auf der Winkelhalbierenden zwischen den äußeren Linearführungen angeordnet werden.

Die Erfindung betrifft auch ein Verfahren zum Bewegen eines Bearbeitungskopfs mittels einer Bearbeitungseinrichtung wie oben beschrieben, das Verfahren umfassend: Positionieren des Bearbeitungskopfs unter einem vorgegebenen Winkel zur Drehachse durch Verändern der Positionen der zweiten Gelenkverbindungen in der Ebene senkrecht zur Drehachse. Zusätzlich zur Änderung der Orientierung des Bearbeitungskopfs in der Ebene können die zusätzlichen Achsen der Parallelkinematik als Zusatzachsen verwendet werden, um eine (zweidimensionale) Bewegung der Bearbeitungsstelle in der Ebene senkrecht zur Drehachse zu realisieren. Da die Bearbeitungsstelle in der Grundstellung, d.h. ohne zusätzliche Achsbewegung, im Schnittpunkt der Orientierungsachsen (B-Achse und C-Achse) liegt, entfällt die ansonsten erforderliche kinematische Transformation für die kartesischen Grundachsen, wodurch die Bahnaufteilung für die kartesischen Grundachsen und die Zusatzachsen bei der Bahnplanung vereinfacht wird. Es ist lediglich die Berechnung einer kinematischen Transformation für die Parallelkinematik erforderlich, die vorteilhafter Weise im zeitlichen Ablauf erst nach der Bahnaufteilung auf die Grundachsen und die Zusatzachsen erfolgt. Erfindungsgemäß umfasst das Verfahren zusätzlich: Paralleles Verschieben des Bearbeitungskopfs in Richtung der Drehachse durch gegenläufiges Bewegen der ersten Kugel- oder Kardangelenke der stabartigen Verbindungselemente einer der Verbindungseinrichtungen. Die gegenläufige Bewegung kann in einer senkrecht zur Drehachse verlaufenden Richtung erfolgen. Es ist aber auch möglich, dass die Positionen der Kugel- oder Kardangelenke unabhängig voneinander in zwei nicht parallel zueinander verlaufenden Ebenen eingestellt werden, so dass nur eine Komponente der Bewegung senkrecht zur Drehachse verläuft. Durch die weiter oben beschriebene Erweiterung der Parallelkinematik mit einer vierten Achse wird ein zusätzlicher Bewegungsfreiheitsgrad in Richtung der Drehachse geschaffen, so dass die Parallelkinematik redundante Bewegungen zu allen drei kartesischen Basisachsen (X, Y, Z) ausführen kann. Hierbei wirkt sich günstig aus, dass die parallelkinematischen Achsen massearm und damit hochdynamisch ausgeführt werden können (beispielsweise in Form von Lineardirektantrieben). Eine Redundanz in den Orientierungsachsen (C-Achse und ggf. weitere Achsen) ist in der Regel nicht erforderlich, da diese ohnehin bereits eine vergleichsweise hohe Dynamik aufweisen. Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung eines Details einer Laserbearbeitungsmaschine mit drei kartesischen Grundachsen und zwei Orientierungsachsen (C- bzw. B-Achse) zur Verschiebung bzw. zur Orientierung eines Laserbearbeitungskopfs im Raum,
- Fig. 2: eine schematische Darstellung einer Bearbeitungseinrichtung, die den Laserbearbeitungskopf der Laserbearbeitungsmaschine von Fig. 1 ersetzt,
- Fig. 3a,b: eine Seitenansicht und eine Draufsicht auf die Bearbeitungseinrichtung von Fig. 2,
- Fig. 4a-c: die Bearbeitungseinrichtung von Fig. 2 und Fig. 3a,b in drei unterschiedlichen Winkelstellungen des Bearbeitungskopfs in Bezug auf eine Drehachse (B-Achse), sowie
- Fig. 5a,b: zwei Seitenansichten der Bearbeitungseinrichtung, bei denen eine Bearbeitungsstelle mit dem Schnittpunkt der Drehachsen übereinstimmt (Fig. 5a) bzw. die Bearbeitungsstelle auf der Drehachse in Bezug auf den Schnittpunkt versetzt ist (Fig. 5b).

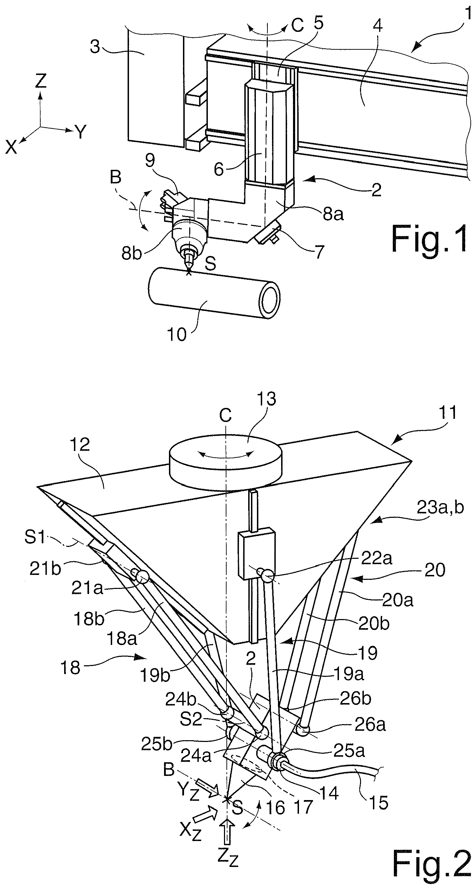

**Fig. 1** zeigt ein Detail einer Bearbeitungsmaschine in Form einer Laserbearbeitungsmaschine 1, an der drei kartesische Grundachsen X, Y, Z zur Verschiebung eines Laserbearbeitungskopfs 2 sowie zwei Drehachsen B, C zur Orientierung des Laserbearbeitungskopfs 2 im Raum gebildet sind. Zur Bewegung des Laserbearbeitungskopfs 2 entlang der X-Achse sind an einem Träger 3 in X-Richtung verlaufende Führungsschienen vorgesehen, die zur Führung eines mittels eines (nicht gezeigten) Antriebs in X-Richtung verschiebbaren ersten Schlittens 4 dienen. An dem ersten Schlitten 4 sind in Y-Richtung verlaufende Führungsschienen gebildet, die zur Führung eines zweiten Schlittens 5 in Y-Richtung mittels eines weiteren (nicht gezeigten) Antriebs dienen. An dem zweiten Schlitten 5 sind in Z-Richtung verlaufende Führungsschienen angebracht, die zur Führung eines dritten, in Z-Richtung verschiebbaren Schlittens 6 mittels eines weiteren Antriebs dienen. Die drei kartesischen Achsen X, Y, Z der Laserbearbeitungsmaschine 1 bauen somit aufeinander auf.

Der dritte Schlitten 6 dient als Halteeinrichtung für den Laserbearbeitungskopf 2 und weist einen (nicht gezeigten) Dreh-Antrieb auf, um den Bearbeitungskopf 2 um eine in Z-Richtung verlaufende Drehachse C (im Folgenden: C-Achse) zu drehen. Eine im gezeigten Beispiel in Y-Richtung verlaufende Drehachse B (im Folgenden: B-Achse) schneidet sich mit der C-Achse im Bereich eines ersten Umlenkspiegels 7, der an einer ersten Baueinheit 8a des Laserbearbeitungskopfs 2 gebildet ist. Eine zweite Baueinheit 8b ist an der ersten Baueinheit 8a um die B-Achse drehbar gelagert. Der (nicht gezeigte) Laserstrahl wird an einem zweiten Umlenkspiegel 9 der zweiten Baueinheit 8b umgelenkt und trifft auf eine Bearbeitungsstelle S an der Oberfläche eines im gezeigten Beispiel rohrförmigen Werkstücks 10. Bei der Bearbeitung mit dem Laserstrahl handelt es sich im vorliegenden Fall um eine schneidende Bearbeitung, bei welcher das Werkstück 10 mittels geeigneter, hier nicht näher beschriebener Lagerungseinrichtungen gehalten und ggf. zusätzlich um seine Längsachse gedreht wird.

Wie in Fig. 1 deutlich zu erkennen ist, ist die Bearbeitungsstelle S am Werkstück 10 relativ weit vom Schnittpunkt der B-Achse und der C-Achse entfernt. Dies führt dazu, dass zur Veränderung der Orientierung des Bearbeitungskopfs 2 bei gleichbleibender Position der Bearbeitungsstelle S nicht nur eine Bewegung der Orientierungsachsen, d.h. der B-Achse und der C-Achse, sondern zusätzlich auch eine Kompensations-Bewegung der kartesischen Achsen X, Y, Z erforderlich ist. Diese Kompensations-Bewegung ist aufgrund der vergleichsweise großen bewegten Massen verhältnismäßig langsam, so dass insbesondere beim Bearbeiten von Werkstücken 10 bzw. von Werkstückteilen mit kleinen Krümmungsradien die erreichbare Bahngeschwindigkeit stark limitiert ist.

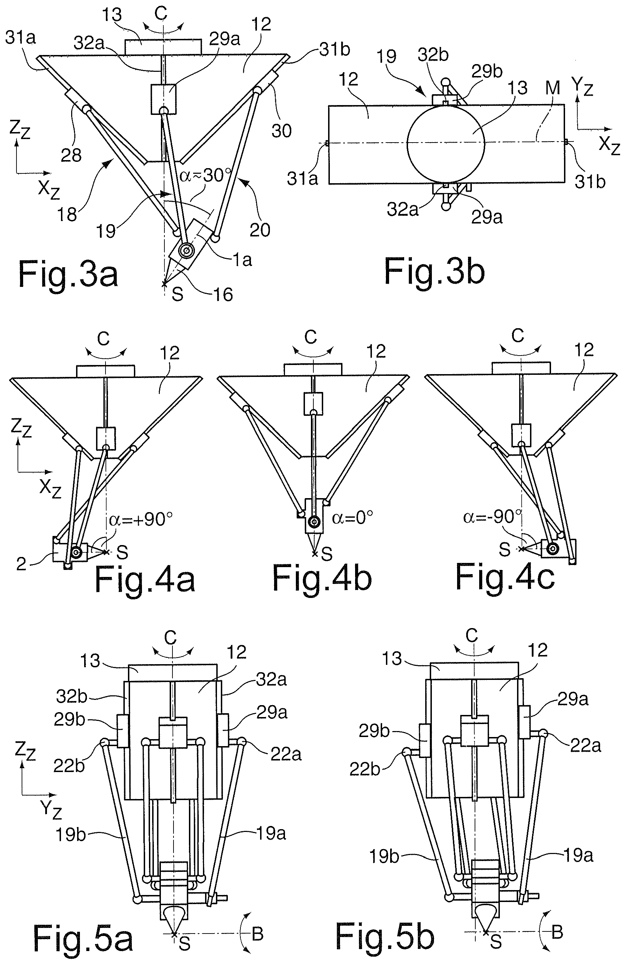

Eine Bearbeitungseinrichtung 11, welche die Bearbeitung mit höheren Bahngeschwindigkeiten ermöglicht, ist in **Fig. 2** in einer perspektivischen Darstellung sowie in **Fig. 3a,b** in einer Seitenansicht bzw. in einer Draufsicht gezeigt. Die Bearbeitungseinrichtung 11 weist einen typischer Weise als Hohlkörper bzw. in Leichtbauweise ausgeführten Grundkörper 12 auf, an dem der Bearbeitungskopf 2, genauer gesagt dessen Gehäuse, gelagert ist. An dem Grundkörper 12 ist ein scheibenförmiges Halteelement 13 angebracht, welches der Anbringung der Bearbeitungseinrichtung 11 an dem dritten Schlitten 6 der Laserbearbeitungsmaschine 1 im Austausch gegen den in Fig. 1 gezeigten Bearbeitungskopf 2 dient. Wie weiter oben dargestellt ist, weist der dritte Schlitten 6 einen rotatorischen Antrieb auf, um die Bearbeitungseinrichtung 11 um die C-Achse zu drehen.

Der in Fig. 2 dargestellte Laserbearbeitungskopf 2 weist eine Schnittstelle 14 in Form einer Steckverbindung zur Anbringung eines Lichtleitkabels 15 auf, über das dem Bearbeitungskopf 2 ein Laserstrahl 16 von einer nicht gezeigten Laserquelle zugeführt wird. Der Laserstrahl 16 wird in dem Bearbeitungskopf 2 an einer Fokussiereinrichtung 17, im gezeigten Beispiel in Form einer gestrichelt angedeuteten Fokussierlinse, auf einen Fokuspunkt fokussiert, welcher die Bearbeitungsstelle S bildet.

Im gezeigten Beispiel ist der Laserbearbeitungskopf 2 derart an dem Grundkörper 12 gelagert, dass dieser eine Drehbewegung um die die Bearbeitungsstelle S enthaltende B-Achse ausführen kann, ohne dass hierzu eine Verschiebung der Bearbeitungseinrichtung 11 mittels der kartesischen Grundachsen X, Y, Z erforderlich ist. Zusätzlich kann durch die nachfolgend im Detail beschriebene parallelkinematische Lagerung des Bearbeitungskopfs 2 am Grundkörper 12 auch eine Verschiebung der Bearbeitungsstelle S entlang von drei Zusatz-Achsrichtungen X_{Z}, Y_{Z}, Z_{Z} realisiert werden, d.h. es kann eine zu den drei kartesischen Achsen X, Y, Z redundante, hoch dynamische Bewegung des Bearbeitungskopfs 2 bzw. der Bearbeitungsstelle S realisiert werden, so dass auch Bereiche mit kleinen Krümmungsradien am Werkstück 10 mit hoher Bahngeschwindigkeit bearbeitet werden können.

Wie anhand von Fig. 2 erkennbar ist, ist der Bearbeitungskopf 2 an dem Grundkörper 12 über eine Parallelkinematik mit drei Verbindungseinrichtungen 18 bis 20 gelagert. Jede der Verbindungseinrichtungen 18 bis 20 weist eine erste Gelenkverbindung mit zwei Kugelgelenken 21a,b; 22a,b; 23a,b auf, die der Anbindung an den Grundkörper 12 dienen. Jede Verbindungseinrichtung 18 bis 20 weist zwei stabförmige Verbindungselemente (Verbindungsstangen) 18a,b; 19a,b; 20a,b auf, an deren dem Grundkörper 12 zugewandten Ende jeweils eines der beiden Kugelgelenke 21a,b; 22a,b; 23a,b gebildet ist. Die beiden Kugelgelenke 21a,b; 22a,b; 23a,b einer jeweiligen ersten Gelenkverbindung einer Verbindungseinrichtung 18 bis 20 definieren erste, zueinander parallele Schwenkachsen S1, um welche die stabförmigen Verbindungselemente 18a,b; 19a,b; 20a,b bzw. die Verbindungseinrichtungen 18 bis 20 in einer jeweiligen Ebene senkrecht zu den Schwenkachsen S1 geschwenkt werden können.

Die Verbindungseinrichtungen 18 bis 20, genauer gesagt die stabartigen Verbindungselemente 18a,b; 19a,b; 20a,b, sind an ihren gegenüberliegenden Enden über entsprechende zweite Gelenkverbindungen, die jeweils zwei zweite Kugelgelenke 24a,b; 25a,b; 26a,b aufweisen, an unterschiedlichen Stellen bzw.

Gelenkpunkten mit dem Laserbearbeitungskopf 2 verbunden, wobei die Verbindungsstellen von jeweils zwei Gelenken 24a,b; 25a,b; 26a,b einer jeweiligen Verbindungseinrichtung 18 bis 20 auf einer gemeinsamen Linie liegen, die eine zweite Schwenkachse S2 definiert. Die zweiten Schwenkachsen S2 der drei Verbindungseinrichtungen 18 bis 20 verlaufen parallel und deren Richtung stimmt mit der Richtung der ersten Schwenkachsen S1 überein. Es versteht sich, dass an Stelle von Kugelgelenken 21a,b; 22a,b; 23a,b bzw. 24a,b; 25a,b; 26a,b gleichermaßen auch Kardangelenke verwendet werden können, um die ersten bzw. zweiten Gelenkverbindungen zu realisieren.

Durch die Lagerung des Laserbearbeitungskopfs 2 am Grundkörper 12 über die drei verschwenkbaren Verbindungseinrichtungen 18 bis 20 kann sowohl die Orientierung des Bearbeitungskopfs 2 als auch die Position des Bearbeitungskopfs 2 in einer Ebene X_{Z}, Z_{Z} eingestellt werden, die senkrecht zu den Schwenkachsen S1, S2 verläuft und die C-Achse enthält. Die Ebene X_{Z}, Z_{Z} verläuft entlang einer Mittelebene M (vgl. Fig. 3b) des Grundkörpers 12, welche eine Symmetrieebene der Bearbeitungseinrichtung 11 bildet, zu der die Bearbeitungseinrichtung 11 im Wesentlichen (bis auf die Zuführung für den Laserstrahl 16) spiegelsymmetrisch ausgebildet ist. Der Laserstrahl 16 verläuft im Bearbeitungskopf 2 entlang einer zentralen Laserstrahlachse 1a, welche in der Mittelebene M liegt. Die Bearbeitungsstelle S liegt daher ebenfalls in der Mittelebene M, wobei der Abstand der Bearbeitungsstelle S vom Bearbeitungskopf 2 durch die Brennweite der Fokussierlinse 17 bestimmt wird. Eine Drehachse B, welche die Bearbeitungsstelle S enthält, verläuft parallel zu den ersten und zweiten Schwenkachsen S1, S2.

Um die Position der zweiten Gelenkverbindungen 24a,b; 25a,b; 26a,b in der Ebene X_{Z}, Z_{Z} senkrecht zur Drehachse B und damit den Ort und die Ausrichtung des Bearbeitungskopfs 2 zu verändern, sind die ersten Gelenkverbindungen 21a,b; 23a,b der beiden äußeren Verbindungseinrichtungen 18, 20 jeweils an einem Lagerelement 28, 30 angebracht, welches entlang einer Linearführung 31a, 31b verschiebbar ist, vgl. Fig. 3a,b. Die beiden äußeren Linearführungen 31a, 31b sind hierbei an zwei geneigten Seitenflächen des Grundkörpers 12 befestigt, der in der Art eines symmetrischen Trapezes ausgebildet ist. Die beiden äußeren Linearführungen 31a, 31b verlaufen entlang der Mittelebene M und schließen jeweils einen Winkel von 45° mit der C-Achse ein.

Die beiden Kugelgelenke 22a, 22b der ersten Gelenkverbindung der mittleren Verbindungseinrichtung 19 sind an zwei Lagerelementen 29a, 29b angebracht, die an Linearführungen 32a, 32b verschiebbar geführt sind, welche an gegenüberliegenden Seitenflächen des Grundkörpers 2 angebracht sind. Die beiden Linearführungen 32a, 32b verlaufen in Richtung der C-Achse in einer die C-Achse enthaltenden, zur Mittelebene M senkrechten Ebene.

Die jeweiligen Lagerelemente 28, 29a, 29b, 30 sind entlang der Linearführungen 31a, 32a, 32b, 31b unabhängig voneinander verschiebbar, wobei als Antrieb im gezeigten Beispiel jeweils ein (nicht gezeigter) Lineardirektantrieb oder ein (nicht gezeigter) Kugelgewindetrieb dient. Für die Energieversorgung der Lineardirektantriebe bzw. der Kugelgewindetriebe sind in der Bearbeitungseinrichtung 11, genauer gesagt an dem Grundkörper 12 bzw. an dem Halteelement 13 Schnittstellen zur Zuführung von elektrischer Energie bzw. Leistung ausgebildet.

Eine Ansteuerung der Lineardirektantriebe zur koordinierten Verschiebung der Lagerelemente 28, 29a, 29b, 30 erfolgt mittels einer (nicht gezeigten) Steuerungseinrichtung der Laserbearbeitungsmaschine 1, welche typischer Weise auch die Bahnplanung bei der Bearbeitung des Werkstücks 10 übernimmt. Durch die koordinierte Verschiebung der Lagerelemente 28, 29a, 29b, 30 entlang der Linearführungen 31a, 32a, 32b, 31b kann ein Drehwinkel a, den der Laserbearbeitungskopf 2, genauer gesagt die Laserstrahlachse 16a des Laserbearbeitungskopfs 2, mit der C-Achse einschließt, über einen maximalen Winkelbereich variiert werden, der im gezeigten Beispiel bei 180° liegt, wie anhand von **Fig. 4a****-c** zu erkennen ist, welcher den Bearbeitungskopf 2 bei der Anordnung unter einem Drehwinkel α von +90°, von 0° und von -90° zeigt.

Bei der in Fig. 4a-c gezeigten Drehbewegung des Laserbearbeitungskopfs 2 um die B-Achse wird zwar die Orientierung, aber nicht der Abstand des Laserbearbeitungskopfs 2 zur B-Achse verändert, d.h. die Bearbeitungsstelle S bleibt unverändert. Es versteht sich, dass zusätzlich zur in Fig. 4a-c gezeigten Drehung auch eine Verschiebung des Laserbearbeitungskopfs 2 in der X_{Z}-Richtung und/oder in der Z_{Z}-Richtung erfolgen kann, um die Bearbeitungsstelle S in der X_{Z}/Z_{Z}-Ebene an einer Stelle zu positionieren, die nicht mit dem Schnittpunkt der B-Achse und der C-Achse übereinstimmt, d.h. die Parallelkinematik ermöglicht zusätzlich zur vergleichsweise trägen Bewegung des Laserbearbeitungskopfs 2 mit Hilfe der kartesischen Grundachsen X, Y, Z eine hoch dynamische Bewegung der Bearbeitungsstelle S in der X_{Z}/Z_{Z}-Ebene.

Bei der in Fig. 4a-c gezeigten Drehbewegung des Laserbearbeitungskopfs 2 werden die beiden Lagerelemente 29a, 29b der mittleren Verbindungseinrichtung 19 synchron entlang der jeweiligen Linearführungen 32a, 32b in Z_{Z}-Richtung verschoben, d.h. die Position der Lagerelemente 29a, 29b in Z_{Z}-Richtung stimmt bei der Verschiebebewegung überein. Um den Laserbearbeitungskopf 2 in Y_{Z}-Richtung (d.h. in Richtung der B-Achse) zu verschieben, werden die Lagerelemente 29a, 29b in Z_{Z}-Richtung gegenläufig bewegt, wie in **Fig. 5a,b** dargestellt ist. Die unterschiedliche Positionierung der Lagerelemente 29a, 29b entlang der Z_{Z}-Richtung führt zu einer Auslenkung, genauer gesagt zu einer Parallelverschiebung, des Laserbearbeitungskopfs 2 in Richtung der B-Achse, wobei die Auslenkung umso größer ausfällt, je größer der Abstand der beiden Lagerelemente 29a, 29b bzw. der zugehörigen Kugelgelenke 22a, 22b entlang der Z_{Z}-Richtung ist. Durch die Parallelverschiebung des Laserbearbeitungskopfs 2 wird selbstverständlich auch die Bearbeitungsstelle S in Y_{Z}-Richtung, d.h. in Richtung der B-Achse, verschoben, wie insbesondere anhand von Fig. 5b zu erkennen ist.

Durch die Verwendung von vier unabhängig voneinander ansteuerbaren Antrieben bzw. Lagerungselementen 28, 29a, 29b, 30 kann zusätzlich zur Drehung um die B-Achse eine redundante Bewegung des Laserbearbeitungskopfs 2 entlang von drei Zusatzachsen X_{Z}, Y_{Z}, Z_{Z} erfolgen.

Da in der Grundstellung, d.h. ohne die Nutzung der Zusatzachsen, die Bearbeitungsstelle S am Schnittpunkt zwischen der B-Achse und der C-Achse liegt, vereinfacht sich die Bahnaufteilung der Bearbeitungsstelle S auf die Grundachsen X, Y, Z und die Zusatzachsen X_{Z}, Y_{Z}, Z_{Z} wesentlich, da keine kinematische Transformation für die kartesischen Grundachsen X, Y, Z erforderlich ist und lediglich die kinematische Transformation für die Parallelkinematik berechnet werden muss, wobei letzteres in vorteilhafter Weise erst nach der Bahnaufteilung erfolgt.

Es versteht sich, dass die Bearbeitungseinrichtung 11 auch auf andere Weise als weiter oben beschrieben ausgebildet sein kann. Beispielsweise kann auf das Vorsehen der vierten unabhängigen Zusatzachse verzichtet werden, d.h. die mittlere Verbindungseinrichtung 19 bzw. deren Gelenkverbindung 29a, 29b kann über ein einziges Lagerelement mit dem Grundkörper 12 verbunden werden, wie dies auch bei den beiden äußeren Verbindungseinrichtungen 18, 20 der Fall ist. Wird auf die zusätzliche Bewegungsmöglichkeit in Richtung der B-Achse verzichtet, sind für die Gelenkverbindungen typischer Weise keine Kugelgelenke erforderlich, sondern es können Scharniergelenke verwendet werden. Auch kann in diesem Fall an Stelle von zwei stabförmigen Verbindungselementen 18a,b, 19a,b, 20a,b ein einziges stabförmiges Verbindungselement für eine jeweilige Verbindungseinrichtung 18 bis 20 verwendet werden, wobei die erste bzw. zweite Gelenkverbindung jeweils über ein einziges Scharniergelenk realisiert werden kann. Abweichend vom oben beschriebenen Ausführungsbeispiel können ggf. an Stelle von verschiebbaren Lagerungselementen zur Anbindung an den Grundkörper 12 teleskopierbare Verbindungselemente bzw. teleskopierbare Verbindungseinrichtungen vorgesehen werden, um eine Veränderung der Orientierung bzw. der Position des Bearbeitungskopfs 2 zu bewirken.

Weiterhin können die Winkel, welche die Linearführungen 31a, 31b 32a, 32b mit der C-Achse einschließen, von dem in Fig. 3a und Fig. 3b gezeigten Beispiel abweichen. Insbesondere ist es nicht erforderlich, dass eine oder mehrere der Linearführungen 31a, 31b, 32a, 32b parallel zur C-Achse verlaufen. Ebenso kann auch die Geometrie des Grundkörpers 12 von der beispielhaft gezeigten trapezartigen Form abweichen. Die Winkel der Linearführungen 31a, 31b, 32a, 32b bzw. die Geometrie des Grundkörpers 12 sind in Abhängigkeit von den Größenverhältnissen beispielsweise des Bearbeitungskopfs 2 so zu wählen, das innerhalb des beabsichtigten Bewegungsraums keine Kollisionen zwischen den Elementen der Parallelkinematik auftreten. Die Winkel bzw. die Geometrie des Grundkörpers 12 wurde für die in dem oben dargestellten Beispiel vorliegenden Größenverhältnisse optimiert.

Die Bearbeitungseinrichtung 11 kann nicht nur an einer Laserbearbeitungsmaschine 1 angebracht werden, wie sie in Fig. 1 gezeigt ist, sondern sie kann beispielsweise auch an einem Roboterarm eines Industrie-Roboters angebracht werden, um die Bahngeschwindigkeit bei der Bearbeitung zu erhöhen. Es versteht sich, dass die Bearbeitungseinrichtung 11 nicht zwingend zur Laserbearbeitung eines Werkstücks ausgebildet sein muss, sondern dass der Bearbeitungskopf 2 auch zur Bearbeitung eines Werkstücks an einer Bearbeitungsstelle S auf andere Weise ausgebildet sein kann, beispielsweise zur mechanischen Bearbeitung, z.B. in Form einer schleifenden oder polierenden Bearbeitung.

Zusammenfassend kann auf die oben beschriebene Weise sowohl eine schnelle Drehung des Laserbearbeitungskopfs 2 um die B-Achse als auch eine hoch dynamische Zusatzachsbewegung in X_{Z}, Z_{Z}-Richtung sowie ggf. in Y_{Z}-Richtung ausgeführt werden. Auf diese Weise kann die Bearbeitungsgeschwindigkeit insbesondere bei kleinen Krümmungsradien des zu bearbeitenden dreidimensionalen Werkstücks deutlich gesteigert werden, wobei gleichzeitig die Schwingungsanregung der Bearbeitungsmaschine reduziert werden kann.

## Patentansprüche

1. Bearbeitungseinrichtung (11) für die Werkstückbearbeitung, umfassend:
einen Bearbeitungskopf (2) zur Bearbeitung eines Werkstücks (10) an einer Bearbeitungsstelle (S),
einen Grundkörper (12), an dem der Bearbeitungskopf (2) gelagert ist, sowie drei Verbindungseinrichtungen (18, 19, 20) zur Verbindung des Grundkörpers (12) mit dem Bearbeitungskopf (2), die jeweils über erste Gelenkverbindungen (21a,b, 22a,b, 23a,b) um zueinander parallele erste Schwenkachsen (S1) schwenkbar mit dem Grundkörper (12) verbunden sind und die jeweils über zweite Gelenkverbindungen (24a,b, 25a,b, 26a,b) um zu den ersten Schwenkachsen (S1) parallele zweite Schwenkachsen (S2) schwenkbar mit dem Bearbeitungskopf (2) verbunden sind, wobei zum Positionieren des Bearbeitungskopfs (2) unter einem vorgegebenen Drehwinkel (a) zu einer zu den ersten und zweiten Schwenkachsen (S1, S2) parallelen, die Bearbeitungsstelle (S) enthaltenden Drehachse (B) die Positionen der zweiten Gelenkverbindungen (24a,b, 25a,b, 26a,b) in einer Ebene (X_{Z}, Z_{Z}) senkrecht zur Drehachse (B) einstellbar sind, wobei jede Verbindungseinrichtung (18, 19, 20) zwei stabartige Verbindungselemente (18a,b, 19a,b, 20a,b) aufweist, die jeweils über eine erste Gelenkverbindung in Form eines ersten Kugel- oder Kardangelenks (21a, 21b; 22a, 22b; 23a, 23b) an dem Grundkörper (12) und die jeweils über eine zweite Gelenkverbindung (24a,b, 25a,b, 26a,b) in Form eines zweiten Kugel- oder Kardangelenks (24a, 24b, 25a, 25b, 26a, 26b) an dem Bearbeitungskopf (2) angebracht sind,
**dadurch gekennzeichnet,**
**dass** zur Parallelverschiebung des Bearbeitungskopfs (2) in Richtung der Drehachse (B) die Positionen der ersten Kugel- oder Kardangelenke (22a, 22b) der stabartigen Verbindungselemente (19a, 19b) einer der Verbindungseinrichtungen (19) unabhängig voneinander einstellbar sind.

2. Bearbeitungseinrichtung nach Anspruch 1, weiter umfassend: mindestens ein an dem Grundkörper (12) entlang einer Linearführung (31a, 32a,b, 31b) verschiebbar geführtes Lagerelement (28, 29a,b, 30) zur Verbindung mindestens einer ersten Gelenkverbindung (21a,b; 23a,b) einer jeweiligen Verbindungseinrichtung (18, 20) oder eines ersten Kugel- oder Kardangelenks (22a, 22b) eines jeweiligen Verbindungselements (19a, 19b) mit dem Grundkörper (12).

3. Bearbeitungseinrichtung nach Anspruch 1 und 2, bei welcher die ersten Kugel- oder Kardangelenke (22a, 22b) der stabartigen Verbindungselemente (19a, 19b) einer der Verbindungseinrichtungen (18) an zwei Lagerelementen (29a, 29b) angebracht sind, die entlang von zwei Linearführungen (32a, 32b) gegenläufig verschiebbar sind, um den Bearbeitungskopf (2) in Richtung der Drehachse (B) parallel zu verschieben.

4. Bearbeitungseinrichtung nach einem der Ansprüche 2 oder 3, bei welcher die Linearführungen (31a, 32a,b, 31b) zu Verschiebung des jeweiligen Lagerelements (28, 29a,b, 30) in einer Ebene (X_{Z}, Z_{Z}) senkrecht zur Drehachse (B) über eine Strecke ausgebildet sind, die ausreichend ist, um den Bearbeitungskopf (2) um einen Drehwinkel (α) von 90° oder mehr, bevorzugt von 180° oder mehr um die Drehachse (B) zu drehen.

5. Bearbeitungseinrichtung nach einem der vorhergehenden Ansprüche, bei dem der Grundkörper (12) als Hohlkörper ausgebildet ist.

6. Bearbeitungsmaschine, insbesondere Laserbearbeitungsmaschine (1), umfassend: eine Bearbeitungseinrichtung (11) nach einem der vorhergehenden Ansprüche.

7. Bearbeitungsmaschine nach Anspruch 6, weiter umfassend: ein Lichtleitkabel (15) zur Zuführung eines Laserstrahls (16) zu dem Bearbeitungskopf (2), sowie eine Fokussiereinrichtung (17) zur Fokussierung des Laserstrahls (16) auf einen die Bearbeitungsstelle (S) bildenden Fokuspunkt.

8. Bearbeitungsmaschine nach Anspruch 6 oder 7, bei welcher die Bearbeitungseinrichtung (11) ein Halteelement (13) aufweist, das an einer Halteeinrichtung (6) der Bearbeitungsmaschine befestigt ist, wobei die Halteeinrichtung (6) ausgebildet ist, die Bearbeitungseinrichtung (11) um eine zur Drehachse (B) senkrechte weitere Drehachse (C) zu drehen.

9. Bearbeitungsmaschine nach Anspruch 8, die eine Bewegungseinrichtung (3, 4, 5) zur Bewegung der Halteeinrichtung (6) entlang von mindestens zwei, bevorzugt entlang von drei Linearachsen (X, Y, Z) aufweist.

10. Bearbeitungsmaschine nach Anspruch 8 oder 9, bei welcher mindestens eine der Linearführungen (32a, 32b) parallel zur weiteren Drehachse (C) verläuft und mindestens eine weitere der Linearführungen (31a, 31b) unter einem Winkel zur weiteren Drehachse (C) ausgerichtet ist.

11. Verfahren zum Bewegen eines Bearbeitungskopfs (2) einer Bearbeitungseinrichtung (11) nach einem der Ansprüche 1 bis 5, umfassend: Positionieren des Bearbeitungskopfs (2) unter einem vorgegebenen Drehwinkel (a) zur Drehachse (B) durch Verändern der Positionen der zweiten Gelenkverbindungen (24a,b, 25a,b, 26a,b) in der Ebene (X_{Z}, Z_{Z}) senkrecht zur Drehachse (B), **gekennzeichnet durch**: Verschieben des Bearbeitungskopfs (2) in Richtung der Drehachse (B) **durch** gegenläufiges Bewegen der ersten Kugel- oder Kardangelenke (22a, 22b) der stabartigen Verbindungselemente (19a, 19b) einer der Verbindungseinrichtungen (19).

## Claims

1. Machining device (11) for workpiece machining, comprising:
a machining head (2) for machining a workpiece (10) at a machining point (S),
a main body (12) on which the machining head (2) is mounted, and
three connecting devices (18, 19, 20) for connecting the main body (12) to the machining head (2), said connecting devices (18, 19, 20) each being connected to the main body (12) in a pivotable manner about mutually parallel first pivot axes (S1) via first articulated joints (21a,b, 22a,b, 23a,b) and each being connected to the machining head (2) in a pivotable manner about second pivot axes (S2), parallel to the first pivot axes (S1), via second articulated joints (24a,b, 25a,b, 26a,b), wherein, in order to position the machining head (2) at a defined angle of rotation (α) with respect to an axis of rotation (B) that is parallel to the first and second pivot axes (S1, S2) and contains the machining point (S), the positions of the second articulated joints (24a,b, 25a,b, 26a,b) are settable in a plane (X_{Z}, Z_{Z}) perpendicular to the axis of rotation (B), wherein each connecting device (18, 19, 20) has two rod-like connecting elements (18a,b 19a,b, 20a,b) which are each attached to the main body (12) via a first articulated joint in the form of a first ball joint or universal joint (21a, 21b; 22a, 22b; 23a, 23b) and which are each attached to the machining head (2) via a second articulated joint (24a,b, 25a,b, 26a,b) in the form of a second ball joint or universal joint (24a, 24b, 25a, 25b, 26a, 26b),
**characterized**
**in that**, for the parallel displacement of the machining head (2) in the direction of the axis of rotation (B), the positions of the first ball joints or universal joints (22a, 22b) of the rod-like connecting elements (19a, 19b) of one of the connecting devices (19) are settable independently of one another.

2. Machining device according to Claim 1, also comprising: at least one bearing element (28, 29a,b, 30), guided on the main body (12) in a displaceable manner along a linear guide (31a, 32a,b, 31b), for connecting at least one first articulated joint (21a,b; 23a,b) of a respective connecting device (18, 20) or a first ball joint or universal joint (22a, 22b) of a respective connecting element (19a, 19b) to the main body (12) .

3. Machining device according to Claim 1 and 2, in which the first ball joints or universal joints (22a, 22b) of the rod-like connecting elements (19a, 19b) of one of the connecting devices (18) are attached to two bearing elements (29a, 29b) which are displaceable in opposite directions along two linear guides (32a, 32b), for a parallel displacement of the machining head (2) in the direction of the axis of rotation (B).

4. Machining device according to either of Claims 2 and 3, in which the linear guides (31a, 32a,b, 31b) are configured to displace a respective bearing element (28, 29a,b, 30) in a plane (X_{Z}, Z_{Z}) perpendicular to the axis of rotation (B) over a distance which is sufficient to rotate the machining head (2) about the axis of rotation (B) through an angle of rotation (α) of 90° or more, preferably of 180° or more.

5. Machining device according to one of the preceding claims, in which the main body (12) is configured as a hollow body.

6. Machine tool, in particular laser machine tool (1), comprising: a machining device (11) according to one of the preceding claims.

7. Machine tool according to Claim 6, also comprising: a fibre-optic cable (15) for conducting a laser beam (16) to the machining head (2), and a focusing device (17) for focusing the laser beam (16) onto a focal point forming the machining point (S).

8. Machine tool according to Claim 6 or 7, in which the machining device (11) has a holding element (13) which is fastened to a holding device (6) of the machine tool, wherein the holding device (6) is configured to rotate the machining device (11) about a further axis of rotation (C) perpendicular to the axis of rotation (B).

9. Machine tool according to Claim 8, which has a moving device (3, 4, 5) for moving the holding device (6) along at least two, preferably along three linear axes (X, Y, Z).

10. Machine tool according to Claim 8 or 9, in which at least one of the linear guides (32a, 32b) extends parallel to the further axis of rotation (C) and at least a further one of the linear guides (31a, 31b) is oriented at an angle to the further axis of rotation (C).

11. Method for moving a machining head (2) of a machining device (11) according to one of Claims 1 to 5, comprising: positioning the machining head (2) at a defined angle of rotation (α) with respect to the axis of rotation (B) in order to change the positions of the second articulated joints (24a,b, 25a,b, 26a,b) in a plane (X_{Z}, Z_{Z}) perpendicular to the axis of rotation (B), **characterized by**: displacing the machining head (2) in the direction of the axis of rotation (B) by moving the first ball joints or universal joints (22a, 22b) of the rod-like connecting elements (19a, 19b) of one of the connecting devices (19) in opposite directions.

## Revendications

1. Dispositif d'usinage (11) pour l'usinage des pièces, comprenant :
une tête d'usinage (2), affectée à l'usinage d'une pièce (10) dans un poste d'usinage (S),
un corps d'embase (12) sur lequel ladite tête d'usinage (2) est montée, ainsi que trois dispositifs de liaison (18, 19, 20) destinés à relier le corps d'embase (12) à la tête d'usinage (2), qui sont respectivement reliés audit corps d'embase (12) par l'intermédiaire de premières liaisons articulées (21a, b, 22a, b, 23a, b), de manière pivotante autour de premiers axes de pivotement (S1) mutuellement parallèles, et sont respectivement reliés à ladite tête d'usinage (2) par l'intermédiaire de secondes liaisons articulées (24a, b, 25a, b, 26a, b), de manière pivotante autour de seconds axes de pivotement (S2) parallèles auxdits premiers axes de pivotement (S1), sachant que, pour positionner ladite tête d'usinage (2) suivant un angle de rotation (a) préétabli, par rapport à un axe de rotation (B) parallèle auxdits premiers et seconds axes de pivotement (S1, S2) et englobant le poste d'usinage (S), les emplacements des secondes liaisons articulées (24a, b, 25a, b, 26a, b) sont réglables dans un plan (X_{Z}, Z_{Z}) perpendiculaire audit axe de rotation (B), chaque dispositif de liaison (18, 19, 20) comportant deux éléments de liaison (18a, b, 19a, b, 20a, b) du type tiges qui sont respectivement implantés, sur le corps d'embase (12), par l'intermédiaire d'une première liaison articulée revêtant la forme d'une première articulation (21a, 21b ; 22a, 22b ; 23a, 23b) à rotule ou à la Cardan, et sont respectivement implantés ou montés, sur la tête d'usinage (2), par l'intermédiaire d'une seconde liaison articulée (24a, b, 25a, b, 26a, b) revêtant la forme d'une seconde articulation (24a, 24b, 25a, 25b, 26a, 26b) à rotule ou à la Cardan,
**caractérisé par le fait**
**que**, pour provoquer le déplacement parallèle de la tête d'usinage (2) dans la direction de l'axe de rotation (B), les emplacements des premières articulations (22a, 22b) à rotule ou à la Cardan, équipant les éléments de liaison (19a, 19b) du type tiges de l'un (19) des dispositifs de liaison, peuvent être réglés indépendamment l'un de l'autre.

2. Dispositif d'usinage selon la revendication 1, incluant par ailleurs : au moins un élément de montage (28, 29a, b, 30) guidé à déplacement linéaire sur le corps d'embase (12), le long d'un guide linéaire (31a, 32a, b, 31b), et pour une liaison, audit corps d'embase (12), d'au moins une première liaison articulée (21a, b ; 23a, b) d'un dispositif de liaison (18, 20) considéré, ou d'une première articulation (22a, 22b) à rotule ou à la Cardan équipant un élément de liaison (19a, 19b) respectif.

3. Dispositif d'usinage selon les revendications 1 et 2, dans lequel les premières articulations (22a, 22b) à rotule ou à la Cardan, équipant les éléments de liaison (19a, 19b) du type tiges de l'un (18) des dispositifs de liaison, sont implantées sur deux éléments de montage (29a, 29b) pouvant être déplacés dans des sens opposés, le long de deux guides linéaires (32a, 32b), en vue d'un déplacement parallèle de la tête d'usinage (2) dans la direction de l'axe de rotation (B).

4. Dispositif d'usinage selon l'une des revendications 2 ou 3, dans lequel les guides linéaires (31a, 32a, b, 31b), affectés au déplacement de l'élément de montage considéré (28, 29a, b, 30) dans un plan (X_{Z}, Z_{Z}) perpendiculaire à l'axe de rotation (B), sont ménagés sur un trajet suffisant pour faire tourner la tête d'usinage (2), autour dudit axe de rotation (B), suivant un angle de rotation (a) de 90° ou plus, préférentiellement de 180° ou plus.

5. Dispositif d'usinage selon l'une des revendications précédentes, dans lequel le corps d'embase (12) est réalisé sous la forme d'un corps creux.

6. Machine d'usinage, notamment machine (1) d'usinage au laser comprenant: un dispositif d'usinage (11) conforme à l'une des revendications précédentes.

7. Machine d'usinage selon la revendication 6, incluant par ailleurs : un câble (15) de guidage de lumière, pour délivrer un rayon laser (16) à la tête d'usinage (2), ainsi qu'un dispositif de focalisation (17) pour focaliser ledit rayon laser (16) sur un point focal matérialisant le poste d'usinage (S).

8. Machine d'usinage selon la revendication 6 ou 7, dans laquelle le dispositif d'usinage (11) comporte un élément de retenue (13) fixé à un dispositif (6) de retenue de ladite machine d'usinage, ledit dispositif de retenue (6) étant réalisé en vue de faire tourner ledit dispositif d'usinage (11) autour d'un axe de rotation (C) additionnel, perpendiculaire à l'axe de rotation (B).

9. Machine d'usinage selon la revendication 8, équipée d'un dispositif (3, 4, 5) de mise en mouvement pour mouvoir le dispositif de retenue (6) le long d'au moins deux, préférentiellement le long de trois axes linéaires (X, Y, Z).

10. Machine d'usinage selon la revendication 8 ou 9, dans laquelle au moins l'un (32a, 32b) des guides linéaires s'étend parallèlement à l'axe de rotation (C) additionnel, et au moins un autre (31a, 31b), parmi lesdits guides linéaires, est orienté en décrivant un angle par rapport audit axe de rotation (C) additionnel.

11. Procédé dévolu à la mise en mouvement d'une tête d'usinage (2) d'un dispositif d'usinage (11) conforme à l'une des revendications 1 à 5, consistant à :
positionner ladite tête d'usinage (2) suivant un angle de rotation (α) préétabli, par rapport à l'axe de rotation (B), en faisant varier les emplacements des secondes liaisons articulées (24a, b, 25a, b, 26a, b) dans le plan (X_{Z}, Z_{Z}) perpendiculaire audit axe de rotation (B), **caractérisé par** : un déplacement de la tête d'usinage (2), dans la direction de l'axe de rotation (B), par mouvement en sens inverse imprimé aux premières articulations (22a, 22b) à rotule ou à la Cardan, équipant les éléments de liaison (19a, 19b) du type tiges de l'un (19) des dispositifs de liaison.
